# DEMANDE DE BREVET EUROPEEN

(11) **EP 1 968 076 A2**
(43) Date de publication de la demande: **10.09.2008**
(21) Numéro de dépôt: 08102344.2
(22) Date de dépôt: 06.03.2008
(51) Int. Cl.: H01B 1/12, C09J 163/00, C09J 179/02

(54) **Materiau composite adhesif a resistivite controlee**

(30) Priorité: 07.03.2007 FR 0753690
(71) Demandeur: Commissariat à l'Energie Atomique, 75015 Paris (FR)
(72) Inventeur: Desvergne-Bleneau, Sandra, 33850 LEOGNAN (FR); Gasse, Adrien, 38100 GRENOBLE (FR); Pron, Adam, 38120 SAINT EGREVE (FR)
(74) Mandataire: Ilgart, Jean-Christophe

(57) **Abrégé**

L'invention a trait à un matériau polymère composite comprenant une matrice en résine adhésive et une charge conductrice de l'électricité consistant en oligoaniline sous une forme conductrice de l'électricité comprenant de 4 à 30 unités répétitives et présente en une teneur allant de 15 à 40% en masse par rapport à la masse totale du matériau, ledit matériau présentant une résistivité allant de 105 à 107 Ω.cm.

## Description

### DOMAINE TECHNIQUE

La présente invention a trait à un matériau polymère composite présentant des propriétés adhésives et une résistivité électrique allant de 10⁵ à 10⁷Ω.cm.

Ces matériaux peuvent être notamment utilisés en tant que revêtements anti-statiques, par exemple, dans des blindages électromagnétiques ou en tant que matériau d'interconnexion surfacique de composants électroniques.

### ÉTAT DE LA TECHNIQUE ANTÉRIEURE

De nombreux documents décrivent dans l'art antérieur des matériaux composites présentant des propriétés adhésives et des propriétés électriques.

Généralement, les mélanges sont préparés par solubilisation des composés adhésifs dans une dispersion de polyaniline suivi de l'évaporation du solvant et de la réticulation de la matrice.

Ainsi, Tiitu et al. dans Polymer 46(2005), pages 6855-6861*,* ont mis au point un matériau composite pour revêtement anti-corrosion obtenu par un procédé comprenant les étapes suivantes :
- une étape de mélange d'une polyaniline sous forme éméraldine base avec une amine remplissant le rôle de durcisseur (tel que le N,N,N',N'-tetrakis(3-aminopropyl)-1,4-butanediamine, le triméthylhexanediamine) ;
- une étape de réticulation du mélange obtenu par ajout d'une résine époxyde du type éther diglycidylique de bisphénol-A.

Il résulte un phénomène de dédopage de la polyaniline du fait de l'utilisation d'un durcisseur amine du type précité ainsi qu'un matériau inhomogène du fait des problèmes de miscibilité entre la polyaniline et la résine époxyde, lequel matériau présente ainsi des propriétés de conduction peu fiables et non reproductibles. Enfin, l'évaporation du solvant lors de la mise en oeuvre accentue la faible miscibilité de la polyaniline dans la résine époxyde.

Le document US 5,416,155 décrit un matériau utilisé notamment dans le domaine de la sérigraphie comprenant un polymère isolant et un polymère conjugué non dopé ou dédopé, tel qu'une polyaniline et éventuellement une charge minérale, des polymères thermoplastiques et des polymères thermodurcissables, tels que des résines époxyde. Il se pose pour ce matériau également un problème de miscibilité entre la polyaniline et la résine époxyde.

Pour résoudre les problèmes liés au dédopage, certains auteurs ont pensé jouer sur un excès de dopants.

Une autre solution consiste à utiliser un dopant de la polyaniline, qui joue également un rôle d'agent de réticulation pour constituer la matrice en résine époxyde.

Ainsi, US 5,662,833 décrit une composition thermodurcie comprenant une polylaniline protonée par un acide phosphonique comprenant au moins un groupe hydroxyle en excès et une matrice issue de la réticulation d'une résine, telle qu'une résine phénol-formaldéhyde, une résine mélamine-formaldéhyde, une résine polyéthylène. Toutefois, dans ce document, les compositions décrites présentent une évolution très forte de leur résistivité en fonction du taux de polyaniline, ce qui conduit à un contrôle difficile des propriétés de celles-ci. De plus, l'utilisation d'un excès d'acide protonique est défavorable tant du point de vue environnemental que du point de vue technologique. En effet, la diffusion des molécules en excès peut conduire à une modification des propriétés dans le temps.

Jia et al. dans Synthetic Metals, 132 (2003) 269-278 décrit un matériau comprenant une matrice issue de la réticulation d'une résine époxyde avec un agent de réticulation du type anhydride d'acide carboxylique et une charge polymérique dispersée à base de polyaniline et d'un dopant du type acide dodécylbenzènesulfonique. Ce matériau ne présente pas une stabilité suffisante pour permettre un contrôle dans une zone de résistivité intermédiaire. De plus, cet agent de réticulation nécessite une température de réticulation de l'ordre de 140°C.

Quel que soit le mode de réalisation, il subsiste dans les matériaux réalisés des problèmes d'inhomogénéité du fait de la miscibilité faible de la polyaniline dans les résines constitutives de la matrice, un problème de dédopage de polyaniline ainsi qu'une difficulté à obtenir des matériaux présentant une résistivité intermédiaire allant de 10⁵ à 10⁷ Ω.cm, ce qui ne permet pas l'utilisation de ces matériaux dans des domaines nécessitant ces résistivités.

### EXPOSE DE L'INVENTION

Les inventeurs se sont fixé comme objectif de résoudre les problèmes évoqués ci-dessus et notamment les problèmes de miscibilité entre la polyaniline et la matrice à base de résine adhésive et présentant une résistivité intermédiaire allant de 10⁵ à 10⁷ Ω.cm.

Ainsi, l'invention a trait à un matériau polymère composite comprenant une matrice en résine adhésive et une charge conductrice de l'électricité consistant en une oligoaniline sous une forme conductrice de l'électricité comprenant de 4 à 30 unités répétitives, ladite oligoaniline étant présente en une teneur allant de 15 à 40% en masse par rapport à la masse totale du matériau, ledit matériau présentant une résistivité allant de 10⁵ à 10⁷ Ω.cm.

On précise que la résistivité est déterminée par la technique 4 points telle qu'explicitée dans la partie expérimentale.

On précise que, par unité répétitive, on entend le motif structural comprenant un cycle phényle et un atome d'azote.

L'oligoaniline doit se présenter sous une forme conductrice de l'électricité, cette forme étant classiquement obtenue par l'adjonction d'un dopant.

Une des formes d'oligoaniline envisageables est la forme éméraldine, dans laquelle le nombre d'atomes d'azote pris dans une fonction imine est égal ou proche du nombre d'atomes d'azote pris dans une fonction amine, cette forme étant protonée par l'adjonction d'un dopant afin de la rendre conductrice de l'électricité.

Une oligoaniline envisageable est le tétramère d'aniline, qui présente 4 unités répétitives anilines conformément à la formule ci-dessous : 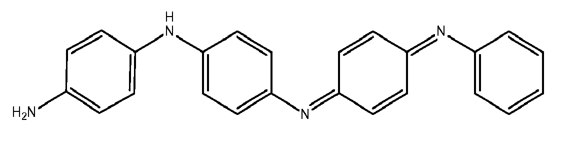 le tétramère ci-dessus étant rendu conducteur de l'électricité par protonation avec un dopant.

Les oligoanilines, du fait de leur faible poids moléculaire, permettent une meilleure miscibilité dans la matrice en résine adhésive et permettent d'accéder à des matériaux présentant une résistivité dans la gamme de 10⁵ à 10⁷ Ω.cm.

Des résines adhésives particulièrement appropriées sont des résines époxydes, lesquelles résultent de la polymérisation d'un ou plusieurs prépolymères comprenant un motif époxyde (dit, par la suite, prépolymère époxyde), lequel constitue un motif polymérisable, la polymérisation ayant lieu, par exemple, avec un agent de réticulation du type acide de Lewis complexé avec un composé organique donneur de doublets d'électrons. De préférence, l'agent de réticulation présente une température d'activation inférieure à 80°C, de préférence inférieure ou égale à 50°C. Par température d'activation, on entend la température à partir de laquelle l'agent de réticulation est apte à engendrer la réticulation du prépolymère. Des agents de réticulation appropriés sont des complexes amine-acide de Lewis, en particulier des complexes amine-BX₃, X correspondant à un atome d'halogène, tel que le fluor ou le chlore. Un agent de réticulation approprié est le chlorobenzylamine-BF₃.

Un prépolymère époxyde approprié peut être choisi parmi ceux comprenant un motif bisphénol A, un motif bisphénol F, un motif diglycidyl éther et/ou un motif novolaque.

Un exemple de prépolymère comprenant un motif bisphénol A est un prépolymère répondant à la formule suivante : 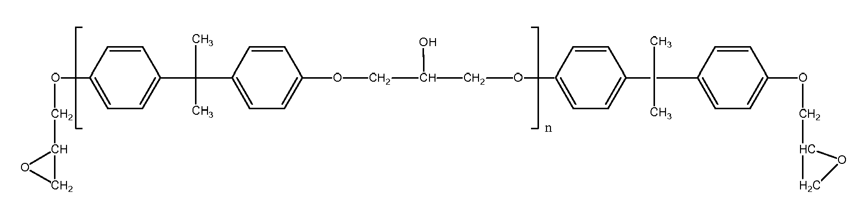 dans laquelle n est un entier allant de 0 à 12.

Par exemple, lorsque n est égal à 0, le prépolymère correspond au diglycidyléther de bisphénol A.

Un exemple de prépolymère comprenant un motif bisphénol F répond à la formule suivante : 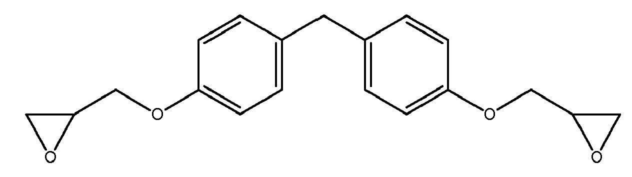 appelé également diglycidyléther de bisphénol F.

Un exemple de prépolymère comprenant un motif diglycidyl éther est le diglycidyléther de 1,4-butanediol répondant à la formule suivante :

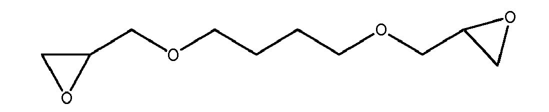

Un prépolymère époxyde approprié peut être également choisi parmi ceux comprenant un motif novolaque.

Un exemple de prépolymère comprenant un motif novolaque est un prépolymère répondant à la formule suivante : 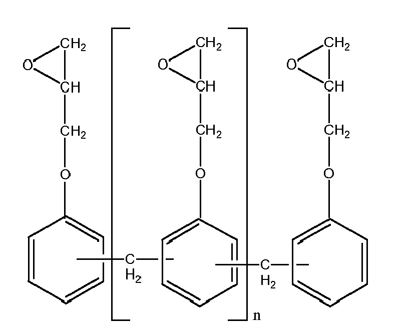 dans laquelle n est un entier allant de 0 à 5.

La résine époxyde peut résulter de la polymérisation d'au moins deux prépolymères époxydes tels que définis ci-dessus, par exemple d'un prépolymère comprenant un motif bisphénol A tel que défini ci-dessus et du diglycidyléther du 1,4-butanediol.

Les oligoanilines sont présentes en une teneur allant de 15 à 40% en masse par rapport à la masse du matériau, ce qui conduit à se situer au-dessus du seuil de percolation, afin de présenter une excellente reproductibilité de la résistivité dans une gamme de 10⁵ à 10⁷ Ω.cm.

On précise que le seuil de percolation correspond à la fraction volumique minimale de phase conductrice pour assurer la conductivité électrique macroscopique du matériau.

En-dessous d'une teneur de 15% en masse d'oligoaniline, la résistivité du matériau varie fortement avec la composition et n'est pas contrôlable, car l'on se situe en-dessous du seuil de percolation.

Au-dessus d'une teneur de 40% en masse d'oligoaniline, les valeurs de résistivité sont trop faibles par rapport à la gamme de résistivité visée. De plus, les propriétés adhésives ne sont plus assurées, car la proportion d'adhésif devient trop faible.

Les matériaux de l'invention comprennent, avantageusement, un ou plusieurs dopants.

Des dopants avantageux pouvant entrer dans la constitution des matériaux de l'invention répondent à la formule suivante : 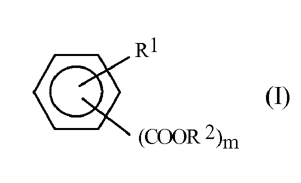 dans laquelle :
- R¹ représente -SO₃H ou PO₃H₂,
- R² est un groupe alkyle linéaire ou ramifié et m est égal à 1 ou 2, ou
- R² est un groupe de formule : 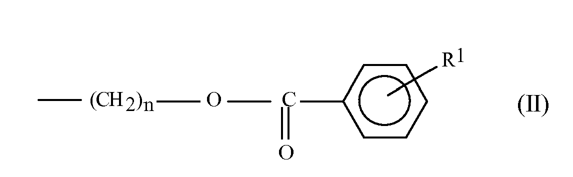
dans laquelle R¹ est tel que défini ci-dessus et n est un nombre entier allant de 1 à 16, et m est égal à 1.

Dans cette formule, le groupe R² peut être un groupe alkyle, linéaire ou ramifié, ayant de préférence de 4 à 12 atomes de carbone de façon à former un groupe hydrophobe jouant le rôle de plastifiant et permettant d'améliorer la solubilité des polyanilines dans des solvants organiques.

A titre d'exemple de groupe susceptible d'être utilisé, on peut citer par exemple le groupe 2-éthyl-hexyle.

Dans le cas où m est égal à 2 et R² est un groupe alkyle, ces acides phosphoniques ou sulfoniques correspondent à des esters d'acides phtalique, isophtalique et téréphtalique fonctionnalisés avec un groupement acide du type -SO₃H ou -PO₃H₂.

Dans le cas où m est égal à 1, il s'agit de benzoates fonctionnalisés sur le cycle aromatique par les groupements acides précités, lorsque R² est un groupe alkyle ou de dibenzoates fonctionnalisés également par des groupements acides et répondant à la formule :

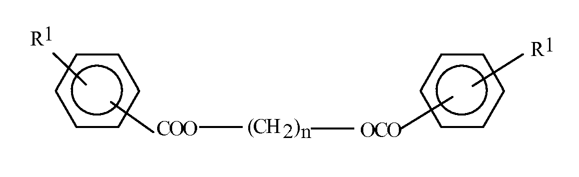

Ces acides sulfoniques ou phosphoniques peuvent être préparés à partir des acides phtaliques ou benzéniques fonctionnalisés correspondants répondant à la formule : 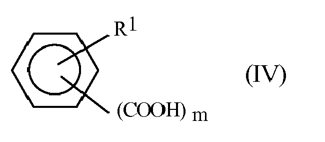 dans laquelle R¹ et m sont tels que définis ci-dessus par estérification de ces acides au moyen d'un alcool de formule R²OH dans laquelle R² est tel que défini ci-dessus.

Les acides de formule (IV) utilisés comme produits de départ dans ce procédé sont des produits du commerce ou peuvent être préparés par sulfonation ou phosphorylation des acides phtaliques ou de l'acide benzénique.

Dans le cas où R² représente le groupe de formule (II) et m est égal à 1, on peut préparer l'acide sulfonique ou phosphonique de la même façon par estérification de l'acide de formule (IV) avec l'alcool correspondant R²OH où R² est le groupe de formule (II), soit alternativement par condensation de deux molécules de formule (IV) avec m = 1, avec un diol de type HO-(CH₂)ₙ-OH.

Les acides sulfoniques et phosphoniques décrits ci-dessus présentent de bonnes propriétés comme agent protonant en raison du groupe S0₃H ou PO₃H₂, et comme plastifiant et solubilisant grâce à la présence du groupe :

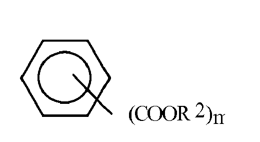

Grâce à l'ajout de tels dopants, il est possible d'améliorer les propriétés mécaniques des oligoanilines et par là même de celle du matériau composite.

En effet, ces dopants, outre le fait d'assurer le dopage des oligoanilines, remplissent également le rôle de plastifiants contribuant à compenser la perte de tenue mécanique de la matrice induite par la présence d'oligoanilines.

L'invention a également trait à un procédé de fabrication d'un matériau tel que défini ci-dessus, comprenant les étapes suivantes :
a) une étape de préparation d'un mélange comprenant un prépolymère de la résine adhésive, une oligoaniline comprenant de 4 à 30 unités répétitives, un solvant organique, un dopant et éventuellement un agent de réticulation sous forme d'un acide de Lewis complexé avec un composé organique donneur de doublets d'électrons ;
b) une étape d'évaporation d'au moins une partie du solvant organique ;
c) une étape d'ajout d'un agent de réticulation si celui-ci n'est pas présent à l'étape a), ledit agent étant un acide de Lewis complexé avec un composé organique donneur de doublets d'électrons ;
d) une étape de réticulation dudit mélange à une température appropriée pour obtenir un matériau présentant une résistivité allant de 10⁵ à 10⁷ Ω.cm,
l'ordre des étapes pouvant être a), b), c) et d) ou a), c), b) et d), l'étape c) n'existant pas si l'agent de réticulation est présent à l'étape a).

Ce procédé est adapté lorsque le prépolymère coexiste de façon séparée de l'agent de réticulation (par exemple vendu par le fournisseur dans des compartiments distincts), auquel cas l'agent de réticulation sera ajouté au cours de l'étape c).

Le prépolymère peut être disponible en mélange direct avec l'agent de réticulation, auquel cas l'étape c) n'a pas lieu d'être, l'agent de réticulation étant présent dès l'étape a).

Du fait de la nature de l'oligoaniline, il y a une grande miscibilité entre celle-ci et le prépolymère, de même qu'il est possible d'utiliser une large gamme de solvants.

L'étape de préparation a) est réalisée par mise en contact de l'oligoaniline, du prépolymère avec un solvant organique et un dopant, et éventuellement de l'agent de réticulation, lorsque que le prépolymère préexiste en présence de l'agent de réticulation.

L'oligoaniline, le prépolymère et le dopant répondent aux mêmes spécificités que dans la partie descriptive relative au matériau.

De préférence, le solvant organique est un solvant présentant une température d'évaporation inférieure à la température de réticulation. Des solvants avantageux peuvent être le tétrahydrofurane, l'acétate d'éthyle.

L'étape d'évaporation b) est réalisée avantageusement à une température inférieure à la température de réticulation, par exemple, sous agitation et sous atmosphère de gaz neutre, tel que l'azote, l'argon. L'étape d'évaporation b) peut être également mise en oeuvre à l'air libre.

L'agent de réticulation est conformément à l'invention un acide de Lewis complexé avec un composé organique donneur de doublets d'électrons. Ce type d'agent de réticulation présente l'avantage d'être chimiquement compatible avec la forme conductrice de l'électricité de l'oligoaniline. De préférence, l'agent de réticulation présente une température d'activation inférieure à 80°C, de préférence inférieure ou égale à 50°C. Par température d'activation, on entend la température à partir de laquelle l'agent de réticulation est apte à engendrer la réticulation du prépolymère. Des agents de réticulation appropriés sont des complexes amine-BX₃, X correspondant à un atome d'halogène, tel que le fluor ou le chlore. Un agent de réticulation approprié est le chlorobenzylamine-BF₃.

Enfin, le procédé de l'invention comprend une étape de réticulation dudit mélange. La température de réticulation sera choisie de façon à être au moins égale à la température d'activation de l'agent de réticulation et de façon à obtenir un matériau présentant une résistivité allant de 10⁵ à 10⁷ Ω.cm.

Cette température de réticulation est avantageusement inférieure à 80°C, notamment lorsque l'agent de réticulation est un complexe chlorobenzylamine-BF₃.

Avant l'étape de réticulation, le procédé peut comprendre une étape de dépôt du mélange sur un substrat sous forme d'une film (par exemple, par enduction simple, par enduction centrifuge, sérigraphie), présentant par exemple une épaisseur allant de 10 à 50 µm, soit des motifs discrets tels que des cordons, des joints ou des matrices de plots, éventuellement déposés à la seringue ou par sérigraphie.

L'invention va maintenant être décrite par rapport aux exemples suivants donnés à titre illustratif et non limitatif.

### BREVE DESCRIPTION DES FIGURES

La figure 1 représente un graphique illustrant la résistivité p (en Ω.cm) en fonction de la teneur en polyaniline ou oligoaniline wt (%), pour des matériaux réalisés conformément à l'exemple comparatif 1 et l'exemple 1.
La figure 2 représente un graphique illustrant la résisitivité p (en Ω.cm) en fonction de la durée de réticulation t(min) pour des matériaux réalisés conformément à l'exemple 2.
La figure 3 représente un graphique illustrant la résistivité p (en Ω.cm) en fonction de la durée de réticulation t(min) pour des matériaux réalisés conformément à l'exemple 3.

### EXPOSÉ DÉTAILLÉ DE MODES DE RÉALISATION PARTICULIERS

Les exemples qui suivent illustrent des matériaux composites comprenant une dispersion de polyaniline (pour l'exemple comparatif 1) ou d'oligomères d'aniline, fournis par la société Paniplast, dans une matrice résultant de la réticulation d'un prépolymère époxyde fourni par la société Epotek.

Les matériaux composites sont réalisés selon le principe suivant.

Dans un premier temps, le prépolymère époxyde est solubilisé dans la dispersion de polyaniline ou d'oligoaniline dans un solvant. Les proportions pour chacun des constituants sont calculées de façon à obtenir au final, après évaporation du solvant la composition souhaitée, notamment le taux d'oligoaniline visé et figurant dans les tableaux ci-dessous.

L'évaporation du solvant est réalisée sous agitation magnétique de façon à obtenir un mélange homogène et éventuellement avec un chauffage modéré (de l'ordre de 40°C) sous flux d'air, d'azote ou d'argon.

Enfin, l'agent de réticulation est ajouté dans des proportions adaptées, les proportions étant de 1 : 10 pour le durcisseur par rapport au prépolymère dans le cas du OM 100. Le mélange est réalisé à l'aide d'une spatule pendant un temps pour obtenir un mélange homogène. Le mélange est débarrassé des restes des solvants.

Dans un deuxième temps, le mélange obtenu est déposé sur un substrat en verre par enduction simple, l'épaisseur du film pouvant aller de 10 à 50 µm et étant homogène.

Dans un troisième temps, le film est soumis à une étape de réticulation dont les conditions sont explicitées dans les tableaux ci-dessous.

La résistivité est mesurée par la technique 4 points selon le protocole suivant.

Cette technique consiste à mesurer la résistivité d'une couche déposée en surface par un système de 4 pointes disposées en ligne. On mesure la différence de potentiel V induite entre deux pointes lors du passage du courant I entre les deux autres. Le dispositif de mesure comprend une cellule à quatre pointes de contact électrique, un générateur très stable, un ampèremètre et un voltmètre électronique. Le générateur alimente en courant les deux pointes (électrodes) extérieures et le voltmètre mesure la tension générée entre les deux pointes médianes (électrodes) par le courant traversant l'échantillon.

On mesure le rapport ΔV/I, ce rapport pouvant être relié à la résistivité du matériau de l'échantillon, l'unité de mesure de la résistivité étant dans notre cas de figure le ohm-cm. Pour cela, il faut connaître l'épaisseur de la couche déposée, l'épaisseur de la couche étant mesurée par microscopie.

### EXEMPLE COMPARATIF 1

Dans cet exemple, le prépolymère époxyde est un mélange de DGEBA (diglycidyl éther de bisphénol-A) et de 1,4-butanediol diglycidyl éther et l'agent de réticulation est un complexe amine-BF₃ (ces ingrédients étant vendus sous le nom de produit EPOTEK OM 100). Dans cet exemple, le polymère conducteur de l'électricité est une polyaniline et non une oligoaniline fournie par Paniplast (Paniplast Sol AP1-T1) et le solvant est le toluène.

**Le tableau 1 ci-dessous résume la nature des compositions ainsi que le cycle de réticulation qui leur a été appliqué.**

| Résine | Charge conductrice | Solvant | Teneur en polyaniline + dopant (% massique) | Temp. de réticul. (°C) | t réticul. (min) |
|---|---|---|---|---|---|
| Epotek OM 100 | Polyaniline + dopant | Toluène | 9,63 | 50 | 240 |
| | | | 19,72 | 50 | 240 |
| | | | 34,88 | 50 | 240 |
| | | | 49,42 | 50 | 240 |
| | | | 100 | 50 | 240 |

La teneur en polyaniline dopée (polyaniline + dopant) est exprimée en pourcentage par rapport à la masse totale (correspondant à la somme de la masse de résine et de polyaniline dopée).

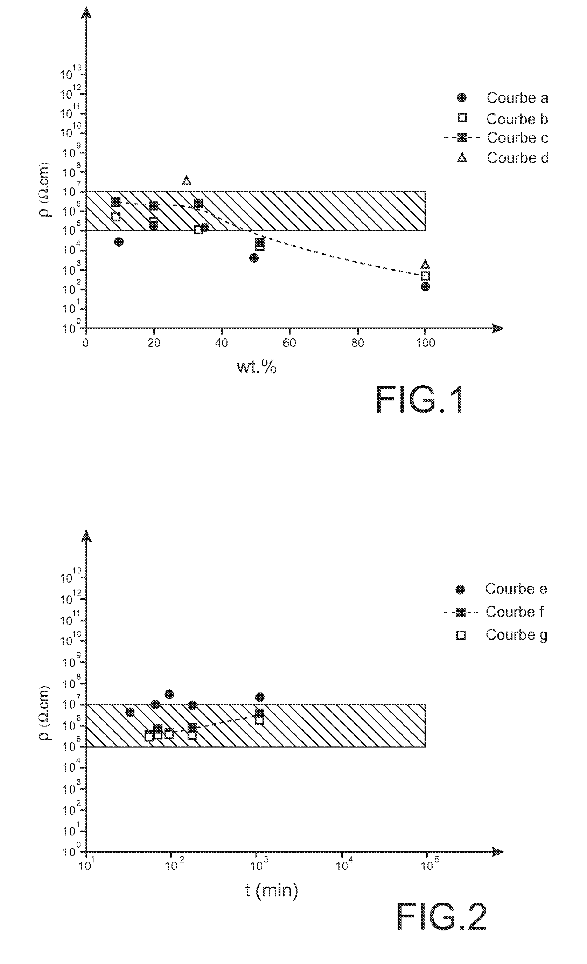

La figure 1 représente la résistivité p en fonction de la teneur en polyaniline dopée dans le matériau final. La courbe a est celle illustrant les résultats obtenus avec les compositions de l'exemple 1. On peut constater que l'on obtient une résistivité de l'ordre de 10⁵ Ω.cm pour des teneurs en polyaniline dopée de 19,72 et 34,88. Toutefois, avec les compositions de cet exemple, il a été rencontré des difficultés importantes pour évaporer le solvant avant l'étape de réticulation ainsi qu'une faible miscibilité entre la polyaniline dopée et la résine époxyde dans le matériau final.

### EXEMPLE 1

Dans cet exemple, le prépolymère époxyde est un mélange de DGEBA (diglycidyl éther de bisphénol-A) et de 1,4-butanediol diglycidyl éther et l'agent de réticulation est un complexe amine-BF₃ (ces ingrédients étant vendus sous le nom de produit EPOTEK OM 100). Dans cet exemple, la charge conductrice de l'électricité est un tétramère d'aniline fourni par Paniplast et le solvant est le tétrahydrofurane (THF).

**Le tableau 2 ci-dessous résume la nature des compositions ainsi que le cycle de réticulation qui leur a été appliqué.**

| Résine | Charge conductrice | Solvant | % tétramère d'aniline + dopant (% massique) | T_{rétic}. (°C) | t_{rétic}. (min) |
|---|---|---|---|---|---|
| Epotek OM 100 | Tétramère d'aniline + dopant | THF | 8, 6 | 50 | 1440 |
| | | | 19,82 | | |
| | | | 33,25 | | |
| | | | 51,22 | | |
| | | | 100 | | |
| | | | 8,6 | T_{ambiante} | 1440 |
| | | | 19,82 | | |
| | | | 33,25 | | |
| | | | 51,22 | | |
| | | | 100 | | |
| | | | 29,73 | 80 | 1140 |
| | | | 100 | | |

La teneur en tétramère d'aniline dopé (tétramère d'aniline + dopant) est exprimée en pourcentage par rapport à la masse totale (correspondant à la somme de la masse de résine et de tétramère d'aniline dopé).

La figure 1 représente la résistivité p en fonction de la teneur en tétramère d'aniline dopé dans le matériau final, les températures de réticulation appliquées étant la température ambiante, 50°C et 80°C. Les courbes b, c et d sont celles illustrant les résultats obtenus avec les compositions de l'exemple 1 respectivement pour la température ambiante, 50°C et 80°C. On peut constater que l'on obtient une résistivité dans la plage de 10⁵-10⁷ Ω.cm pour des teneurs en tétramère d'aniline dans la plage de 15 à 40% en masse pour des températures de réticulation inférieures à 80°C. On constate qu'une température de réticulation de 80°C contribue à augmenter la résistivité du matériau résultant, laquelle sort de la gamme visée.

### EXEMPLE 2

Dans cet exemple, le prépolymère époxyde est un mélange de DGEBA (diglycidyl éther de bisphénol-A) et de 1,4-butanediol diglycidyl éther et l'agent de réticulation est un complexe amine-BF₃ (ces ingrédients étant vendus sous le nom de produit EPOTEK OM 100).

Dans cet exemple, la charge conductrice de l'électricité est un tétramère d'aniline fourni par Paniplast et le solvant est le tétrahydrofurane (THF).

A partir de ce mélange, différents cycles de réticulation ont été imposés.

**Le tableau 3 ci-dessous résume la nature des compositions ainsi que le cycle de réticulation qui leur a été appliqué.**

| Résine | Charge conductrice | Solvant | % tétramère d'aniline + dopant (% massique) | T_{rétic}. (°C) | t_{rétic}. (min) |
|---|---|---|---|---|---|
| Epotek OM 100 | Tétramère d'aniline + dopant | THF | 30,12 | 50 | 55 |
| | | | | | 70 |
| | | | | | 95 |
| | | | | | 178 |
| | | | | | 1095 |
| | | | | 80 | 33 |
| | | | | | 65 |
| | | | | | 95 |
| | | | | | 178 |
| | | | | | 1095 |

La teneur en tétramère d'aniline dopé (tétramère d'aniline + dopant) est exprimée en pourcentage par rapport à la masse totale (correspondant à la somme de la masse de résine et de tétramère d'aniline dopé).

La figure 2 représente la résistivité ρ (en Ω.cm) en fonction de la durée de réticulation. Il ressort de cette figure qu'une température de réticulation de 80°C induit une résistivité trop élevée par rapport au domaine visé, à savoir une résistivité s'échelonnant de 10⁵ à 10⁷ Ω.cm (cf.courbe e).
Pour ce qui est de la température de réticulation de 50°C, il a été constaté que l'allongement du temps de réticulation influence la résistivité finale du matériau (courbe f) tout en restant dans la gamme souhaitée, la résistivité gardant une valeur constante pendant au moins une semaine à température ambiante (courbe g). Par exemple, un cycle de réticulation de 175 minutes à 50°C pour une composition de 30,12% en masse de tétramère d'aniline dopé dans le matériau final correspond à une résistivité de 6,8.10⁵ Ω.cm.

### EXEMPLE 3

Dans cet exemple, le prépolymère époxyde est un mélange de DGEBA (diglycidyl éther de bisphénol-A) et de 1,4-butanediol diglycidyl éther et l'agent de réticulation est un complexe amine-BF₃ (ces ingrédients étant vendus sous le nom de produit EPOTEK OM 100).

Dans cet exemple, la charge conductrice de l'électricité est un tétramère d'aniline fourni par Paniplast et le solvant est le tétrahydrofurane (THF).

Deux mélanges à base de ces ingrédients ont été préparés.

**Le tableau 4 ci-dessous résume la nature des compositions ainsi que le cycle de réticulation qui leur a été appliqué.**

| Résine | Charge conductrice | Solvant | % tétramère d'aniline + dopant (% massique) | T_{rétic}. (°C) | t_{rétic}. (min) | tᵣₑₚₒₛ (min) |
|---|---|---|---|---|---|---|
| Epotek OM 100 | Tétramère d'aniline + dopant | THF | 29,73 | 50 | 55 | 0 |
| | | | | | 70 | |
| | | | | | 95 | |
| | | | | | 178 | |
| | | | | | 1095 | |
| | | | | | 37 | 50 |
| | | | | | 60 | |
| | | | | | 89 | |
| | | | | | 127 | |
| | | | | | 1077 | |
| | | | 21,68 | 50 | 40 | 0 |
| | | | | | 60 | |
| | | | | | 120 | |
| | | | | | 180 | |
| | | | | | 13140 | |
| | | | | | 30 | 50 |
| | | | | | 70 | |
| | | | | | 90 | |
| | | | | | 130 | |

La teneur en tétramère d'aniline dopé (tétramère d'aniline + dopant) est exprimée en pourcentage par rapport à la masse totale (correspondant à la somme de la masse de résine et de tétramère d'aniline dopé).

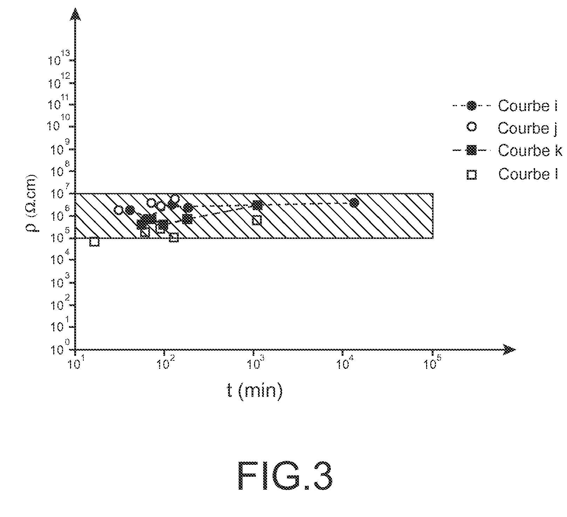

La figure 3 représente la résistivité ρ (en Ω.cm) en fonction de la durée de réticulation.

Il a été imposé un temps de repos entre la préparation du mélange et son dépôt et comparé les valeurs de résistivité alors obtenues avec celles des échantillons déposés sans temps d'attente (courbes i et k pour des teneurs respectives en tétramère d'aniline dopé de 21,68 % et 29,73% et un temps de repos de 0 minute et courbes j et l pour des teneurs respectives en tétramère d'aniline dopé de 21,68% et 29,73% et un temps de repos de 50 minutes.

Nous observons pour les deux compositions peu d'influence du temps de repos imposé sur la valeur de résistivité, qui reste ainsi dans le domaine de résistivité voulu.

## Revendications

1. Matériau polymère composite comprenant une matrice en résine adhésive et une charge conductrice de l'électricité consistant en une oligoaniline sous une forme conductrice de l'électricité comprenant de 4 à 30 unités répétitives, ladite oligoaniline étant présente en une teneur allant de 15 à 40% en masse par rapport à la masse totale du matériau, ledit matériau présentant une résistivité allant de 10⁵ à 10⁷ Ω.cm.

2. Matériau selon la revendication 1, dans lequel la résine adhésive est une résine époxyde résultant de la polymérisation d'un ou plusieurs prépolymères comprenant un motif époxyde, la polymérisation ayant lieu avec un agent de réticulation du type acide de Lewis complexé avec un composé organique donneur de doublets d'électrons.

3. Matériau selon la revendication 2, dans lequel l'agent de réticulation est un complexe amine-acide de Lewis.

4. Matériau selon la revendication 2 ou 3, dans lequel la résine époxyde résulte de la polymérisation d'un ou plusieurs prépolymères époxydes comprenant un motif bisphénol A, un motif bisphénol F, un motif diglycidyl éther et/ou un motif novolaque.

5. Matériau selon la revendication 4, dans lequel le prépolymère époxyde comprenant un motif bisphénol A répond à la formule suivante : 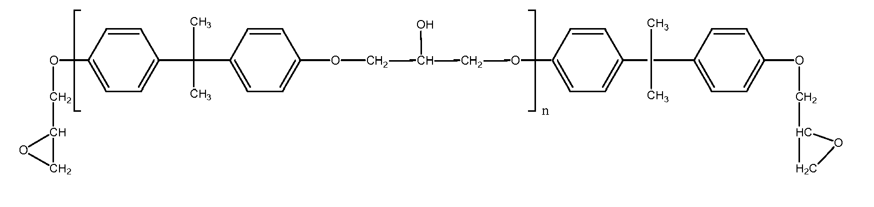 dans laquelle n est un entier allant de 0 à 12.

6. Matériau selon la revendication 4, dans lequel le prépolymère époxyde comprenant un motif bisphénol F répond à la formule suivante :

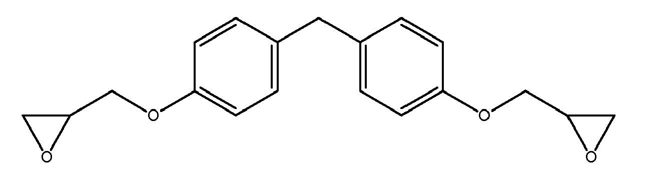

7. Matériau selon la revendication 4, dans lequel le prépolymère époxyde comprenant un motif diglycidyl éther répond à la formule suivante :

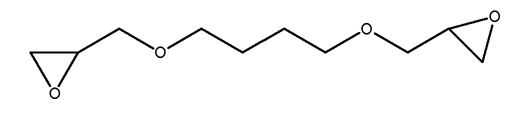

8. Matériau selon la revendication 4, dans lequel le prépolymère époxyde comprenant un motif novolaque répond à la formule suivante : 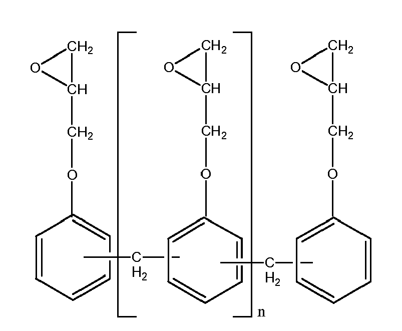 dans laquelle n est un entier allant de 0 à 5.

9. Matériau selon l'une quelconque des revendications 4 à 8, dans lequel la résine époxyde résulte de la polymérisation d'au moins deux prépolymères époxydes tels que définis selon l'une des revendications 5 à 8.

10. Matériau selon l'une quelconque des revendications 4 à 8, dans lequel la résine époxyde résulte de la polymérisation d'un prépolymère époxyde tel que défini à la revendication 5 et d'un prépolymère époxyde tel que défini à la revendication 7.

11. Matériau selon l'une quelconque des revendications précédentes, dans lequel l'oligoaniline est un tétramère d'aniline.

12. Matériau selon l'une quelconque des revendications précédentes, comprenant un dopant répondant à la formule suivante : 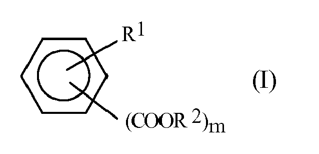 dans laquelle :
- R¹ représente -SO₃H ou PO₃H₂,
- R² est un groupe alkyle linéaire ou ramifié et m est égal à 1 ou 2, ou
- R² est un groupe de formule : 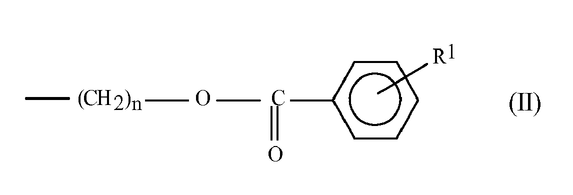
dans laquelle R¹ est tel que défini ci-dessus et n est un nombre entier allant de 1 à 16, et m est égal à 1.

13. Procédé de fabrication d'un matériau tel que défini à la revendication 1, comprenant les étapes suivantes :
a) une étape de préparation d'un mélange comprenant un prépolymère de la résine adhésive, une oligoaniline comprenant de 4 à 30 unités répétitives, un solvant organique, un dopant et éventuellement un agent de réticulation sous forme d'un acide de Lewis complexé avec un composé organique donneur de doublets d'électrons ;
b) une étape d'évaporation d'au moins une partie du solvant organique ;
c) une étape d'ajout d'un agent de réticulation si celui-ci n'est pas présent à l'étape a), ledit agent étant un acide de Lewis complexé avec un composé organique donneur de doublets d'électrons ;
d) une étape de réticulation dudit mélange à une température appropriée pour obtenir un matériau présentant une résistivité allant de 10⁵ à 10⁷ Ω.cm,
l'ordre des étapes pouvant être a), b), c) et d) ou a), c), b) et d), l'étape c) n'existant pas si l'agent de réticulation est présent à l'étape a).

14. Procédé de fabrication selon la revendication 13, dans lequel le solvant organique est un solvant présentant une température d'évaporation inférieure à la température de réticulation.

15. Procédé de fabrication selon la revendication 13 ou 14, dans lequel le solvant organique est choisi parmi le tétrahydrofurane, l'acétate d'éthyle.

16. Procédé de fabrication selon l'une quelconque des revendications 13 à 15, dans lequel l'agent de réticulation présente une température d'activation inférieure à 80°C, de préférence inférieure ou égale à 50°C.

17. Procédé de fabrication selon la revendication 16, dans lequel l'agent de réticulation est un complexe amine-BX₃, X correspondant à un atome d'halogène.

18. Procédé de fabrication selon la revendication 17, dans lequel l'agent de réticulation est un complexe chlorobenzylamine-BF₃.

19. Procédé de fabrication selon l'une quelconque des revendications 13 à 18, dans lequel l'étape de réticulation est réalisée à une température de réticulation inférieure à 80°C.

20. Procédé de fabrication selon l'une quelconque des revendications 13 à 19 comprenant, en outre, avant l'étape de réticulation, une étape de dépôt du mélange sur un substrat sous forme d'un film, d'un cordon, d'un joint, d'une matrice de plots.
